# EUROPÄISCHE PATENTSCHRIFT

(11) **EP 1 999 808 B1**
(45) Veröffentlichungstag und Bekanntmachung des Hinweises auf die Patenterteilung: **04.11.2009**
(21) Anmeldenummer: 07722123.2
(22) Anmeldetag: 28.03.2007
(51) Int. Cl.: H01M 2/18, H01M 2/14

(54) **BLEIAKKUMULATOR UND ZUGEHÖRIGER SEPARATOR**
LEAD-ACID RECHARGEABLE BATTERY AND SEPARATOR THEREFOR
ACCUMULATEUR AU PLOMB ET SÉPARATEUR POUR CELUI-CI

(30) Priorität: 28.03.2006 DE 102006014691
(43) Veröffentlichungstag der Anmeldung: 10.12.2008
(73) Patentinhaber: VB Autobatterie GmbH & Co. KGaA, 30419 Hannover (DE)
(72) Erfinder: JOHNS, Sandra, 31157 Sarstedt (DE)
(74) Vertreter: Gerstein, Hans Joachim
(86) Internationale Anmeldenummer: PCT/DE2007/000565
(87) Internationale Veröffentlichungsnummer: WO 2007/110065

(56) Entgegenhaltungen:
- EP-A1- 0 899 801
- EP-A2- 0 250 846
- EP-A2- 0 541 124
- JP-A- 2003 346 767
- US-A- 4 552 823

## Beschreibung

Die Erfindung betrifft einen Bleiakkumulator mit mindestens einem Elektrodensatz aus abwechselnd angeordneten positiven und negativen plattenförmigen Elektroden, zwischen denen Separatoren zur Trennung der gegenpoligen Elektroden angeordnet sind, wobei die Separatoren jeweils aus zwei Separatorenblättem durch Fügen von aufeinander liegenden Randbereichen der Separatorenblätter zu auf einer Seite zum Einstecken einer Elektrodenplatte offenen Taschen ausgebildet sind.

Die Erfindung betrifft weiterhin einen Separator zur Trennung gegenpoliger Elektrodenplatten eines solchen Bleiakkumulators mit zwei Separatorenblättern, die zu einer auf einer Seite zum Einstecken einer Elektrodenplatte offenen Tasche an aufeinander liegenden Randbereichen miteinander verbunden sind.

Separatoren dienen in Akkumulatoren bekanntlich dazu, Elektrodenplatten entgegengesetzter Polarität voneinander elektrisch zu trennen, so dass sich ein elektrisch leitfähiger Weg zwischen jeweils zwei Elektroden über den Elektrolyten bildet.

In Blei-Säure-Akkumulatoren ist der typische Separator ein poröses Diaphragma mit parallel verlaufenden Rippen auf einer Oberfläche. Regelmäßig werden die Rippen an der positiven Platte anliegend montiert, so dass der negativen Platte eine glatte Seite zugewandt ist. Es ist jedoch auch möglich, auch die der negativen Platte zugewandte Seite mit Rippen zu versehen oder die Montage umgekehrt zu vorzunehmen. Es ist bekannt, Separatoren in Form einer oben offenen Tasche auszubilden, indem ein Separatorenblatt gefertigt wird, das eine die Höhe von zwei Separatoren etwas übersteigende Länge aufweist. Das Blatt wird auf halber Länge gegeneinander gefaltet und die Seitenbereiche werden beispielsweise miteinander verschweißt, so dass sich die oben offene Tasche ausbildet.

Aus EP 0 541 124 B1 ist ein Separator der eingangs erwähnten Art bekannt, der in der genannten Weise taschenartig mit nach innen gerichteten Rippen ausgebildet ist, um eine positive Elektrodenplatte aufzunehmen. Die Rippen im mittleren Bereich des Separators verlaufen vertikal und parallel zueinander. Die Rippen im Seitenrandbereich bestehen aus kurzen, parallel zueinander laufenden Rippenabschnitten, die horizontal oder schräg zu vertikalen Rippen im mittleren Bereich verlaufen. Die im Randbereich angeordneten zweiten Rippen weisen eine geringere Rippenhöhe als die im mittleren Bereich angeordneten ersten Rippen auf und dienen zur Anlage an den Kanten der in die Tasche eingesteckten positiven Elektrodenplatte.

EP 0 994 518 B1 offenbart ebenfalls einen taschenförmig ausgebildeten Separator, dessen Rippen zur Taschenaußenseite zeigen. Im mittleren Bereich sind vertikale Rippen ausgebildet, während die Seitenrandbereiche eine Vielzahl kleinerer Rippen aufweisen. Die mit einem quadratischen oder rechteckigen Querschnitt ausgebildeten Rippen dienen zur Verringerung der Auflagefläche des Separators, insbesondere an der positiven Elektrodenplatte, da dort Sauerstoff gebildet werden kann, der ein flächig anliegendes Separatormaterial korrodieren lassen würden. Die Rippen im mittleren Bereich und im Seitenwandbereich sind daher so ausgebildet, dass entstehende Gase zur oben offenen Seite des Akkumulators entweichen können.

Die Rippen müssen eine gewisse Stabilität aufweisen, woraus sich eine gewisse Mindestbreite ergibt. Die Separatoren sollten ferner so ausgebildet sein, dass die Elektrodenplatten relativ zu den Separatoren, insbesondere zu taschenförmig ausgebildeten Separatoren, seitlich verschiebbar sind, um die Ausrichtung der Elektrodenplatten zu ermöglichen.

US 5,558,952 offenbart einen Taschenseparator, dessen beide Lagen, die an zwei gegenüber liegenden Rändern miteinander verbunden sind, parallel zu den beiden Rändern verlaufende mittige Rippen aufweist. Am Rand des Separators befinden sich an beiden Lagen schräg gestellte Rippen, deren Höhe bezogen auf die jeweilige Lage von innen nach außen abnimmt. Die Rippen befinden sich im schräg verlaufenden Teil der Separatortasche, so dass sie mit einem relativ weit innen liegendem Bereich diagonal zur Kante einer in die Separatortasche eingesteckten Plattenelektroden verlaufen. Die Abnahme der Höhe der Rippe nach außen ist durch das Zusammenfügen der beiden Lagen durch die Randbereiche bedingt, wodurch die Rippen der beiden Lagen im Querschnitt schräg aufeinander zu verlaufen.

Die Basis-Materialstärke des Separatorblatts ist hingegen konstant. Die Verbindung aufeinander liegender Ränder erfolgt angrenzend an die schräg verlaufenden, geneigten Rippen.

US-Patent 6,001,503 offenbart taschenförmige Separatoren für Bleiakkumulatoren, die einen mit einer Vielzahl eng nebeneinander liegenden Rippen geringer Höhe versehenen Randbereich aufweisen. Zwei aneinander liegende Separatorenblätter werden im äußeren Bereich miteinander verbunden, wobei die Separatorenblätter zusammengezogen werden und mit der Seitenkante einer eingetaschten Elektrodenplatten in Kontakt treten.

US 6,410,183 B2 offenbart einen Batterieseparator für Bleiakkumulatoren, der zur Erhöhung der Durchstoßfestigkeit eine Vielzahl von zusätzlichen kleinen Rippen in den Schulterbereichen aufweist, an denen zwei aneinandergrenzende Separatorenblätter miteinander verbunden werden.

Eine ähnliche Ausführungsform zeigt WO 2005/015661 A1. Die Zusatzrippen an den Randbereichen sind sägezahnförmig.

Weiterhin ist aus der DE 102 52 674 B4 ein Separator bekannt, bei dem im Randbereich neben einer Anzahl von ersten Rippen weitere Rippen mit einem ansteigenden Rippenprofil vorgesehen sind, die im symmetrisch justierten Zustand der benachbarten Elektrode an der Fläche der Elektrode mit einer am höchsten Punkt des Anstiegs des Rippenprofils ausgebildeten linienförmigen Kante anliegen.

US 963,284 A offenbart einen Separator für Akkumulatoren mit Rippen und Randbereichen gleicher Stärke wie die Rippen.

Das Problem der herkömmlichen taschenförmigen Separatoren besteht darin, dass die Elektrodenplatten an den Randbereichen nach dem Fügen aufeinander liegender Separatorenblätter dort festgeklemmt werden. Die Elektrodenplatten können dann nicht mehr einfach ausgerichtet werden und die Gefahr des Durchstoßens der Separatoren durch die scharfen Kanten der Elektrodenplatten wird erhöht

Aufgabe der vorliegenden Erfindung ist es daher, einen verbesserten Separator und einen Bleiakkumulator, enthaltend einen Separator, zu schaffen, bei dem die Durchstoßfestigkeit, die Fügbarkeit der Randbereiche aufeinander liegender Separatorenblätter und die Verschiebbarkeit der Elektrodenplatten verbessert wird.

Die Aufgabe wird mit dem Separator der eingangs genannten Art erfindungsgemäß dadurch gelöst, dass die Basismaterialstärke der Separatorenblätter an den Randbereichen von der Außenkante eines Randbereichs in direkter Richtung zum Anlagebereich des Separatorblatts für eine Elektrodenplatte zunimmt und die Basismaterialstärke im Randbereich angrenzend an den Anlagebereich größer als die Basismaterialstärke des Anlagebereichs ist.

Im Unterschied zu den herkömmlichen Lösungen, bei denen an den Randbereichen ggf. die Geometrie durch zusätzliche Rippen verändert wurde, wird nunmehr vorgeschlagen, die Basis-Materialstärke des Separatorenblatts selbst an den Randbereichen zu vergrößern. Es wird somit eine Stufe zwischen dem Anlagebereich für eine Elektrodenplatte und den angrenzenden Randbereich ausgebildet. Diese Stufe verhindert ein Festklemmen der Elektrodenplatte in den Separatorenblättem und führt dazu, dass diese besser ausgerichtet werden kann. Die Materialanhäufung im Randbereich führt zu einer signifikanten Erhöhung der Durchstoßfestigkeit der Separatoren. Dadurch, dass die Basismaterialstärke im Randbereich vom Anlagebereich nach außen hin wieder abnimmt; d. h. im Querschnitt keilförmig zuläuft, wird zudem erreicht. Materialspannung von den Kanten eingetaschter Elektrodenplatten weggenommen wird.

Vorteilhaft ist es, wenn im Randbereich angrenzend an den Anlagebereich mindestens eine über die Basismaterialstärke hinausragende Rippe angeordnet ist. Mit Hilfe dieser mindestens einen Rippe im Randbereich kann die Ausrichtung und Justierung eingetaschter Elektrodenplatten unterstützt werden. Im Übrigen ist die Oberfläche der Randbereiche glatt, um ein stabiles und einfaches Fügen aufeinander liegender Separatorenblätter zu gewährleisten.

Weiterhin ist es vorteilhaft, wenn in üblicher Weise im Anlagebereich für eine Elektrodenplatte eine Mehrzahl von über die Basismaterialstärke des Anlagebereichs hinausragende Rippen vorgesehen sind.

Dabei können die Separatoren ausgewählte Hauptrippen zur Positionierung einer Elektrodenplatten mit einer zu Nebenrippen größeren Rippenhöhe haben.

Die Separatorentaschen können so ausgebildet sein, dass die Rippen nach außen weisen und negative Elektrodenplatten in die innen glatte Separatorentasche aufgenommen werden. Besonders vorteilhaft ist es jedoch, wenn Rippen im Innenraum der Separatorentasche vorhanden sind und positive Elektrodenplatten eingetascht werden.

Die flach aufeinander liegenden im Querschnitt keilförmigen Randbereiche zugeordneter Separatorenblätter können zur Bildung einer Tasche miteinander verklebt, verschweißt oder gerändelt sein. Etwaige andere geeignete Fügeverfahren sind gleichermaßen denkbar.

Die Aufgabe wird weiterhin mit einem Separator der eingangs genannten Art dadurch gelöst, dass die Basis-Materialstärke der Separatorenblätter an den Randbereichen von der Außenkante eines Randbereichs in Richtung zum Anlagebereich des Separatorenblatts für eine Elektrodenplatte zunimmt und die Basismaterialstärke im Randbereich angrenzend an den Anlagebereich größer als die Basis-Materialstärke des Anlagebereichs ist.

Vorteilhafte Ausführungsformen sind in den Unteransprüchen beschrieben.

Die Erfindung wird anhand eines Ausführungsbeispiels mit den beigefügten Zeichnungen näher erläutert. Es zeigen:
- Figur1 -: Querschnittsansicht eines Separatorblatts mit Rippen und keilförmig zulaufenden Randbereichen erhöhter Basis-Materialstärke;
- Figur 2 -: Querschnitts-Ausschnittsansicht eines Randbereichs des Separatorblatts aus Figur 1;
- Figur 3 -: Querschnitts-Ausschnittsansicht des an den Randbereich angrenzenden Anlagebereichs des Separatorblatts aus Figur 1.
- Figur 4 -: Querschnitts-Ausschnittsansicht eines aus Stegen keilförmig ausgebildeten Randbereichs eines Separatorenblatts.

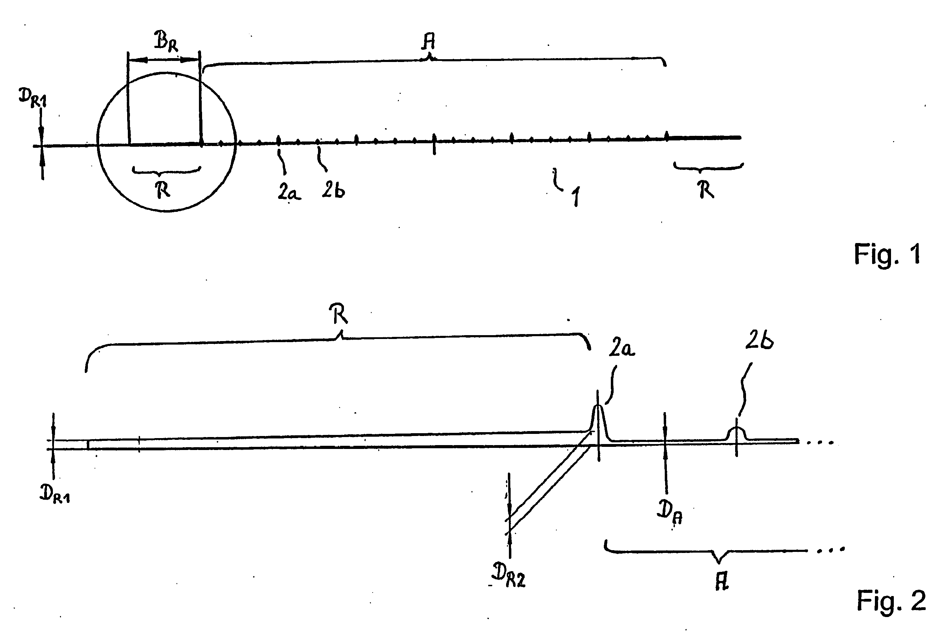

Die Figur 1 lässt eine Querschnittsansicht eines Separatorblatts 1 erkennen, das einen Anlagebereich A für eine Elektrodenplatte (nicht dargestellt) und Randbereiche R an den Seitenkanten hat. Im Anlagebereich A sind Haupt- und Nebenrippen 2a, 2b in an sich üblicher Weise vorgesehen.

Die Randbereiche R haben eine Breite B_{R} und weisen eine mittlere Basis-Materialstärke D_{R} auf die größer als die Basis-Materialstärke des Separatorenblatts 1 (ohne Berücksichtigung der Rippen) des Anlagebereichs A ist.

Die Figur 2 lässt den in der Figur 1 skizzierten linken Randbereich R in vergrößerter Ansicht im Detail erkennen. Es ist deutlich, dass die Basis-Materialstärke D_{R2} (ohne Berücksichtigung der Hauptrippe 2a) im Grenzbereich zwischen Randbereich R und Anlagebereich A größer als die Basis-Materialstärke D_{A} des Anlagebereichs ist. Weiterhin ist erkennbar, dass der Randbereich R nach außen keilförmig verjüngt ist, indem die Basis-Materialstärke D_{R1} des Separatorenblatts 1 an dem Randbereich R von der Außenkante des Randbereichs R in (direkter) Richtung zum Anlagebereich A des Separtorenblatts 1 bis zu der Basis-Materialstärke D_{R2} zunimmt, die größer als die Basis-Materialstärke D_{R1} an der Außenkante ist.

Durch die keilförmige Verjüngung der Randbereiche wird erreicht, dass eine Materialspannung an den Kanten eingetaschter Elektrodenplatten verringert wird.

Es ist weiterhin deutlich, dass die Randbereiche R keinerlei Rippen aufweisen und eine glatte Oberfläche haben, so dass die Randbereiche R aneinander angrenzender zu einer Tasche miteinander gefügter Separatorenblätter 1 flach aufeinander liegen. Auch dies verbessert die Fügbarkeit der zugeordneten Separatorenblätter, beispielsweise durch Verkleben, Verschweißen, wie z. B. Ultraschallverschweißen, Rändeln etc..

Durch die erhöhte Basismaterialstärke D_{R2} des Randbereichs R angrenzend an den Anlagebereich A im Vergleich zur Basis-Materialstärke D_{A} des Anlagenbereichs A und der damit verbundenen Materialanhäufung wird die Durchstoßfestigkeit der Separatorentaschen verbessert.

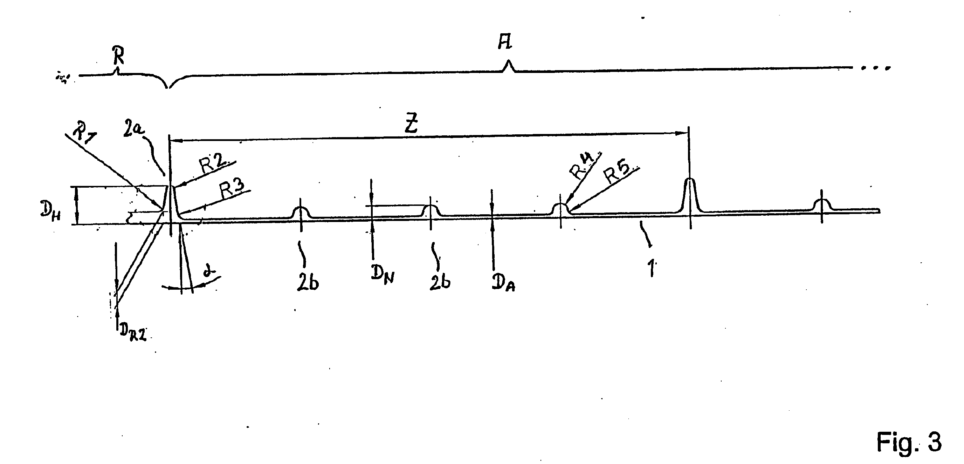

Die Figur 3 lässt einen Ausschnitt des Separatorenblatts 1 im Bereich des Anlageabschnitts A im Querschnitt erkennen. Es wird deutlich, dass die Hauptrippen 2a im Übergang zum Randbereich R einen ersten Radius R1 aufweisen, der vorzugsweise dem Radius R3 im Übergang zum Anlagebereich A entspricht, aber auch unterschiedlich sein kann. Der Radius R1 und R3 kann beispielsweise 0,3 mm betragen.

Der Radius R2 der Krümmung der Hauptrippen 2a ist wesentlich kleiner als die Übergangsradien R1 und R3 und beträgt beispielsweise 0,15 mm.

Weiterhin ist erkennbar, dass zwischen den Hauptrippen 2a, 2b eine Anzahl von beispielsweise drei Nebenrippen 2b angeordnet sind, die sich in Längsrichtung des Separatorenblatts 1 erstrecken. Es ist deutlich, dass der Kopfradius R4 der Nebenrippen 2b deutlich größer als der Kopfradius R2 der Hauptrippen 2a ist und beispielsweise 0,3 mm beträgt, d. h. doppelt so groß wie der Kopfradius R2 der Hauptrippen 2a ist. Weiterhin ist deutlich, dass die Übergangsradien R5 der Nebenrippen 2b zum Separatorenblatt 1 kleiner als die Übergangsradien R1 und R3 der Hauptrippen 2a sind. Beispielsweise beträgt der Übergangsradius R5 0,2 mm.

Die Höhe D_{N} der Nebenrippen 2b ist geringer als die Höhe D_{H} der Hauptrippen. Vorzugsweise beträgt das Verhältnis zwischen Höhe D_{H} der Hauptrippen zu D_{N} der Höhe der Nebenrippen 2a etwa 2,5. In einer bevorzugten Ausführungsform beträgt die Höhe D_{H} 1,5 mm und die Höhe der D_{N} der Nebenrippen 2b 0,6 mm. Die Basis-Materialstärke D_{A} des Separatorenblatts 1 ist diesbezüglich noch wesentlich geringer und liegt vorzugsweise im Bereich von 0,2 bis 0,1 mm, 0,15 mm. Das Verhältnis zwischen Höhe D_{N} von Nebenrippe 2b und Basismaterialstärke D_{A} des Separatorenblatts 1 liegt vorzugsweise im Bereich zwischen 3 und 5 und beträgt vorzugsweise etwa 4.

Es ist weiterhin erkennbar, dass über die Fläche in Querrichtung im Zwischenraum Z zwischen zwei aufeinander folgenden Hauptrippen 2a eine relativ geringe Anzahl von drei Nebenrippen 2b vorgesehen sind. Im Vergleich zu herkömmlichen Rippen ist die Materialanhäufung durch die Nebenrippen 2b mit Hilfe der verhältnismäßig großen Höhe D_{N} der Nebenrippen 2b und im Vergleich zu herkömmlichen Nebenrippen relativ großen Breite bzw. relativ großen Kopfradius R4 so stark, dass eine relativ große Steifigkeit des Separatorenblatts 1 in Längsrichtung erzielt wird. Dies hat den Vorteil, dass der Arbeitstakt zur Herstellung der Separatorentaschen und zum Eintaschen der Elektrodenplatten in die Separatorentaschen, die durch Hochfalten und Fügen der Separatorenblätter 1 an den Randbereichen R gebildet werden, erhöht werden kann.

Aus der Figur 3 ist weiterhin erkennbar, dass die Hauptrippen 2a mit einem Winkel α von beispielsweise etwa 9° geneigt sind. Durch diesen Neigungswinkel wird erreicht, dass die auf den Hauptrippen 2a aufliegenden Elektrodenplatten sich hinreichend leicht verschieben lassen und auf der anderen Seite eine Wellenbildung der Separatorenblätter 1 zusammen vermieden wird: Der Wellenbildung wirken die relativ breiten Nebenrippen 2b ebenfalls entgegen.

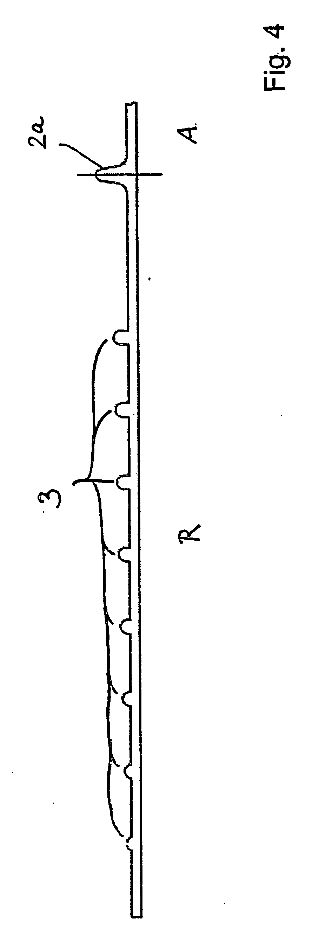

Figur 4 zeigt eine Querschnitts-Ausschnittsansicht eines mit Hilfe von Stegen 3 keilförmig ausgebildeten Randbereichs eines Separatorenblatts 1. Die Stege 3 sind voneinander beabstandet angeordnet und haben ausgehend von der letzten Hauptrippe 2a des Anlagenbereichs A in Richtung Seitenkante des Separatorblatts 1 verringerte Höhen, so dass die gemittelte Basis-Materialstärke des Separatorenblatts 1 an dem Randbereich R von der Außenkante des Randbereichs R in (direkter) Richtung zum Anlagebereich A zunimmt. Durch die Stege 3 kann vorteilhaft im Vergleich zu einem in Figur 2 skizzierten massiven keilförmigen Randbereich R Material eingespart werden.

## Patentansprüche

1. Separator zur Trennung gegenpoliger Elektrodenplatten eines Bleiakkumulators mit zwei Separatorenblättern (1), die an aufeinander liegenden Randbereichen (R) zu einer auf einer Seite zum Einstecken einer Elektrodenplatte offenen Tasche miteinander verbunden sind, **dadurch gekennzeichnet, dass** die Basis-Materialstärke (D_{R}) der Separatorenblätter (1) an den Randbereichen (R) von der Außenkante eines Randbereichs (R) in Richtung zum Anlagebereich (A) des Separatorblattes (1) für eine Elektrodenplatte zunimmt und die Basis-Materialstärke (D_{R2}) im Randbereich (R) angrenzend an den Anlagebereich (A) größer als die Basis-Materialstärke (D_{A}) des Anlagebereichs (A) ist.

2. Separator nach Anspruch 1, **dadurch gekennzeichnet, dass** im Randbereich (R) angrenzend an den Anlagebereich (A) mindestens eine über die Basis-Materialstärke (D_{R2}) hinausragende Rippe (2a) angeordnet ist.

3. Separator nach Anspruch 1 oder 2, **dadurch gekennzeichnet, dass** im Anlagebereich (A) eine Mehrzahl von über die Basis-Materialstärke (D_{A}) des Anlagebereichs (A) hinausragende Rippen (2a, 2b) vorgesehen sind.

4. Separator nach Anspruch 1 oder 2, **dadurch gekennzeichnet, dass** ausgewählte Hauptrippen (2a) zur Positionierung einer Elektrodenplatte eine zur Rippenhöhe (D_{N}) von Nebenrippen (2b) größere Rippenhöhe (D_{H}) haben.

5. Separator nach einem der Ansprüche 1 bis 4, **dadurch gekennzeichnet, dass** die flach aufeinander liegenden im Querschnitt keilförmigen Randbereiche (R) zugeordneter Separatorenblätter (1) zur Bildung einer Tasche miteinander verklebt, verschweißt oder gerändelt sind.

6. Separator nach einem der Ansprüche 2 bis 5, **dadurch gekennzeichnet, dass** die Rippen (2a, 2b) im Innenraum der Tasche angeordnet sind.

7. Bleiakkumulator, enthaltend Separatoren nach einem der vorhergehenden Ansprüche, mit mindestens einem Elektrodensatz aus abwechselnd angeordneten positiven und negativen plattenförmigen Elektroden, die zwischen den Separatoren zur Trennung der gegenpoligen Elektroden angeordnet sind, wobei die Separatoren jeweils aus zwei Separatorenblättem (1) durch Fügen von aufeinander liegenden Randbereichen (R) von Separatorenblättern (1) zu auf einer Seite zum Einstecken einer Elektrodenplatte offenen Taschen ausgebildet sind, ***dadurch gekennzeichnet, dass*** die Basis-Materialstärke (D_{R}) der Separatorenblätter (1) an den Randbereichen (R) von der Außenkante eines Randbereichs (R) in Richtung zum Anlagebereich (A) des Separatorblatts (1) für eine Elektrodenplatte zunimmt und die Basis-Materialstärke (D_{R2}) im Randbereich (R) angrenzend an den Anlagebereich (A) größer als die Basis-Materialstärke (D_{N}) des Anlagebereichs (A) ist.

8. Bleiakkumulator nach Anspruch 7, **dadurch gekennzeichnet, dass** im Randbereich (R) angrenzend an den Anlagebereich (A) mindestens eine über die Basis-Materialstärke (D_{R2}) hinausragende Rippe (2a) angeordnet ist.

9. Bleiakkumulator nach Anspruch 7 oder 8, **dadurch gekennzeichnet, dass** im Anlagebereich (A) eine Mehrzahl von über die Basis-Materialstärke (D_{A}) des Anlagebereichs hinausragende Rippen (2a, 2b) vorgesehen sind.

10. Bleiakkumulator nach Anspruch 8 oder 9, **dadurch gekennzeichnet, dass** die Separatoren ausgewählte Hauptrippen (2a) zur Positionierung einer Elektrodenplatte mit einer zu der Rippenhöhe (D_{N}) von Nebenrippen (2b) größeren Rippenhöhe (D_{H}) haben.

11. Bleiakkumulator nach einem der Ansprüche 8 bis 10, **dadurch gekennzeichnet, dass** die Rippen (2a, 2b) im Innenraum der Tasche angeordnet sind.

12. Bleiakkumulator nach einem der vorhergehenden Ansprüche, **dadurch gekennzeichnet, dass** die flach aufeinander liegenden im Querschnitt keilförmigen Randbereiche (R) zugeordneter Separatorenblätter (1) zur Bildung einer Tasche miteinander verklebt, verschweißt oder gerändelt sind.

## Claims

1. Separator for separation of opposite-polarity electrode plates in a lead-acid rechargeable battery having two separator leaves (1) which are connected to one another on rim areas (R) which rest on one another to form a pocket which is open on one side for insertion of an electrode plate, **characterized in that** the basic material thickness (D_{R}) of the separator leaves (1) at the rim areas (R) increases from the outer edge of a rim area (R) in the direction of the contact area (A) of the separator leaf (1) for an electrode plate, and the basic material thickness (D_{R2}) in the rim area (R) adjacent to the contact area (A) is greater than the basic material thickness (D_{A}) in the contact area (A).

2. Separator according to Claim 1, **characterized in that** at least one rib (2a) is arranged in the rim area (R) adjacent to the contact area (A) and projects beyond the basic material thickness (D_{R2}).

3. Separator according to Claim 1 or 2, **characterized in that** a plurality of ribs (2a, 2b) are provided in the contact area (A) and project beyond the basic material thickness (D_{A}) of the contact area (A).

4. Separator according to Claim 1 or 2, **characterized in that** selected main ribs (2a) for positioning an electrode plate have a rib height (D_{H}) which is greater than the rib height (D_{N}) of secondary ribs (2b).

5. Separator according to one of Claims 1 to 4, **characterized in that** the rim areas (R), which have a wedge-shaped cross section and rest flat on one another, of associated separator leaves (1) are adhesively bonded, welded or knurled to one another in order to form a pocket.

6. Separator according to one of Claims 2 to 5, **characterized in that** the ribs (2a, 2b) are arranged in the interior of the pocket.

7. Lead-acid rechargeable battery, containing separators according to one of the preceding claims, having at least one set of electrodes composed of alternately arranged positive and negative electrodes which are in the form of plates and are arranged between the separators for separation of the opposite-polarity electrodes, with the separators each being formed from two separator leaves (1) by joining rim areas (R), which rest on one another, of separator leaves (1) to form pockets which are open on one side for insertion of an electrode plate, ***characterized in that*** the basic material thickness (D_{R}) of the separator leaves (1) at the rim areas (R) increases from the outer edge of a rim area (R) in the direction of the contact area (A) of the separator leaf (1) for an electrode plate, and the basic material thickness (D_{R2}) in the rim area (R) adjacent to the contact area (A) is greater than the basic material thickness (D_{A}) in the contact area (A).

8. Lead-acid rechargeable battery according to Claim 7, **characterized in that** at least one rib (2a) is arranged in the rim area (R) adjacent to the contact area (A) and projects beyond the basic material thickness (D_{R2}).

9. Lead-acid rechargeable battery according to Claim 7 or 8, **characterized in that** a plurality of ribs (2a, 2b) are provided in the contact area (A) and project beyond the basic material thickness (D_{A}) of the contact area (A).

10. Lead-acid rechargeable battery according to Claim 8 or 9, **characterized in that** the separators have selected main ribs (2a) for positioning an electrode plate with a rib height (D_{H}) which is greater than the rib height (D_{N}) of secondary ribs (2b) .

11. Lead-acid rechargeable battery according to one of Claims 8 to 10, **characterized in that** the ribs (2a, 2b) are arranged in the interior of the pocket.

12. Lead-acid rechargeable battery according to one of the preceding claims, **characterized in that** the rim areas (R), which have a wedge-shaped cross section and rest flat on one another, of associated separator leaves (1) are adhesively bonded, welded or knurled to one another in order to form a pocket.

## Revendications

1. Séparateur de plaques d'électrodes de polarité opposée d'un accumulateur au plomb comportant deux feuilles de séparateur (1) reliées l'une à l'autre au niveau des zones de bord (R), appliquées l'une sur l'autre pour former une poche ouverte dans laquelle on peut engager une plaque d'électrode,
**caractérisé en ce que**
l'épaisseur de matière de base (D_{R}) des feuilles de séparateur (1), au niveau des zones de bord (R), augmente à partir de l'arête extérieure d'une zone de bord (R) en direction d'une zone d'appui (A) de la feuille de séparateur (1) pour une plaque d'électrode et l'épaisseur de matière de base (D_{R2}) dans la zone de bord (R) adjacente à la zone d'appui (A), est plus grande que l'épaisseur de matière de base (D_{A}) de la zone d'appui (A).

2. Séparateur selon la revendication 1,
**caractérisé en ce que**
la zone de bord (R) adjacente à la zone d'appui (A), comporte au moins une nervure (2a) qui dépasse de l'épaisseur de matière de base (D_{R2}).

3. Séparateur selon la revendication 1 ou 2,
**caractérisé en ce que**
la zone d'appui (A) comporte plusieurs nervures (2a, 2b) qui dépassent l'épaisseur de matière de base (D_{A}) de la zone d'appui (A).

4. Séparateur selon les revendications 1 ou 2,
**caractérisé en ce que**
les nervures principales, sélectionnées (2a) pour positionner une plaque d'électrode, ont une hauteur de nervure (D_{H}) supérieure à la hauteur (D_{N}) des nervures auxiliaires (2b).

5. Séparateur selon l'une des revendications 1 à 4,
**caractérisé en ce que**
les zones de bord (R) des feuilles de séparateur (1) associées et à section en forme de coin s'appuient à plat l'une sur l'autre et sont collées, soudées ou moletées pour former une poche.

6. Séparateur selon l'une des revendications 2 à 5,
**caractérisé en ce que**
les nervures (2a, 2b) sont prévues dans le volume intérieur de la poche.

7. Accumulateur au plomb comportant des séparateurs selon l'une des revendications précédentes avec au moins un jeu d'électrodes, composé d'électrodes en forme de plaques positives et négatives alternées, entre les séparateurs d'électrodes de polarité opposée,
les séparateurs sont réalisés respectivement par deux feuilles de séparateur (1), par assemblage des zones de bord (R) des feuilles de séparateur (1) appliquées l'une sur l'autre pour former des poches ouvertes d'un côté, permettant de recevoir une plaque d'électrode,
**caractérisé en ce que**
pour une plaque d'électrode, l'épaisseur de matière de base (D_{R}) des feuilles de séparateur (1) au niveau des zones de bord (R), augmente à partir de l'arête extérieure de l'une des zones de bord (R) en direction de la zone d'appui (A) de la feuille de séparateur (1) et l'épaisseur de matière de base (D_{R2}) dans la zone de bord (R) adjacente à la zone d'appui (A) est supérieure à l'épaisseur de matière de base (D_{N}) de la zone d'appui (A).

8. Accumulateur au plomb selon la revendication 7,
**caractérisé en ce que**
dans la zone de bord (R) voisine de la zone d'appui (A), au moins une nervure (2a) dépasse de l'épaisseur de matière de base (D_{R2}).

9. Accumulateur au plomb selon les revendications 7 ou 8,
**caractérisé en ce que**
dans la zone d'appui (A), un ensemble de nervures (2a, 2b) dépasse de l'épaisseur de la matière de base (D_{A}) de la zone d'appui.

10. Accumulateur au plomb selon les revendications 8 ou 9,
**caractérisé en ce que**
les séparateurs ont des nervures principales (2a) sélectionnées pour positionner une plaque d'électrode ayant une hauteur de nervure (D_{H}) supérieure à la hauteur (D_{N}) des nervures auxiliaires (2b).

11. Accumulateur au plomb selon l'une des revendications 8 à 10,
**caractérisé en ce que**
les nervures (2a, 2b) se trouvent dans le volume intérieur de la poche.

12. Accumulateur au plomb selon l'une des revendications précédentes,
**caractérisé en ce que**
les zones de bord (R), à section en forme de coin, appliquées à plat l'une sur l'autre, et appartenant à des feuilles de séparateur (1), associées, sont réunies l'une à l'autre par collage, soudage ou moletage, pour former une poche.
